# EUROPEAN PATENT APPLICATION

(11) **EP 4 502 097 A1**
(43) Date of publication of application: **05.02.2025**
(21) Application number: 23191636.2
(22) Date of filing: 16.08.2023
(51) Int. Cl.: C09J 7/35, G09F 3/10

(54) **LABELS WITH HOT MELT ADHESIVE PATCH PATTERNS**

(30) Priority: 01.08.2023 US 202318363065
(71) Applicant: Iconex LLC, Duluth, GA 30096 (US)
(72) Inventor: SETHNA, Michael, Jerfferson City, 37760 (US); PRICE, Jim, Duluth, 30096 (US); EPLER, Rob, Duluth, 30096 (US)
(74) Representative: Murgitroyd & Company

(57) **Abstract**

Labels with discontinuous hot melt adhesive patch patterns are provided. Hot melt adhesive is applied to a backside of a substrate for a given label in a discontinuous hot melt adhesive patch pattern. In an embodiment, the hot melt adhesive of a given discontinuous hot melt adhesive patch pattern is layered on the backside of a given label.

## Description

### Background

Labels are used for a variety of purposes across multiple industries. Furthermore, labels have a variety of capabilities based on their intended usages. Many label capabilities are dependent upon a variety of adhesive-based factors, such as adhesive type, adhesive pattern, adhesive patch shapes, adhesive flood coat, mixtures of adhesives, and adhesive activation mechanism (e.g., pressure, heat, etc.). Capabilities that require a high tack are often obtained through using a high tack adhesive that is flood coated on a backside of the label.

Hot melt adhesive is a high tack adhesive often flood coated on the backsides of shipping labels. Hot melt adhesives bond to diverse ranges of substrates (carboard, metal, plastics, fabric, paper, wood, etc.), which is why many tapes use hot melt adhesive. Hot melt adhesives can be reactivated through application of pressure and/or heat once cooled and bonded on the backsides of the labels. However, hot melt adhesive is difficult to work with due to its viscosity during application to backsides of labels, which is why labels that typically include a hot melt adhesive are flood coated on the backsides of the labels. However, flood coating hot melt adhesive on the backsides of labels requires utilization of more adhesive product, which increases label manufacturing costs.

### Summary

In various embodiments, labels with hot melt adhesive patch patterns and a method for manufacturing labels with the hot melt adhesive patch patterns are provided. The invention is a label, roll of labels, and method as defined in the appended claims.

### Brief Description of the Drawings

FIG. 1 is a diagram of discontinuous hot melt adhesive patch patterns, according to an example embodiment.
FIG. 2 is a diagram of discontinuous hot melt adhesive patch patterns on backsides of labels, according to an example embodiment.
FIG. 3 is a diagram of additional discontinuous hot melt adhesive patch patterns on backsides of labels, according to an example embodiment.
FIG. 4 is an image a discontinuous hot melt adhesive patch pattern applied in layers to backside of a label substrate, according to an example embodiment.
FIG. 5 is a diagram of a hot melt adhesive module comprising jet nozzles that eject hot melt adhesive onto backsides of labels during label manufacturing, according to an example embodiment.
FIG. 6 is a diagram of a stamp wheel, transfer roller, or cylinder with discontinuous or continuous hot melt adhesive patch patterns that stamp the hot melt adhesive patch patterns onto backsides of labels during manufacturing, according to an example embodiment.
FIG. 7 is a diagram of a gravure printing cylinder, rotary screen, and/or flatbed screen for applying discontinuous or continuous hot melt adhesive patch patterns onto backsides of labels during manufacturing, according to an example embodiment.
FIGS 8A--8D are diagrams of rolls of adhesive patch patterns on backsides of label substrates with the labels defined by sense marks printed on the rolls, according to an example embodiment.
FIG. 9 is a diagram of a method for manufacturing a roll of linerless labels with discontinuous hot melt adhesive patch patterns on the backside of the linerless labels, according to an example embodiment.

### Detailed Description

As stated above, hot melt adhesive is difficult to work with although hot melt adhesive provides high tack adhesive capabilities to labels and can be easily reactivated on the labels with pressure and/or heat. Consequently, conventional hot melt adhesive labels are typically flood coated on the backsides of labels. Flood coating requires more adhesive product and is therefore expensive for label manufacturers.

These issues are solved with the labels provided herein. The labels include discontinuous hot melt adhesive patch patterns disposed on backsides of the labels. In an embodiment, a given discontinuous hot melt adhesive patch pattern includes layered hot melt adhesive, which results in the label being repositionable or capable of being removed from an initial surface and reapplied to another surface without any loss of adhesive tack. In an embodiment, coat weights of each layer of hot melt adhesive are reduced (i.e., thinner) from coat weights associated with non-layered discontinuous hot melt adhesive patches. In an embodiment, hot melt modules with nozzles or jets dispense and/or eject the hot melt adhesive in the discontinuous patch patterns onto the backsides of the labels. In an embodiment, stamp wheels, rotary or flatbed screens, or gravure print cylinders press/apply the hot melt adhesive in the discontinuous patch patterns onto the backsides of the labels. In an embodiment, the hot melt modules and/or stamp wheels oscillate during application of the hot melt adhesive providing varying patterns, coat weights of hot melt adhesive, and/or layered hot melt adhesive on the backsides of the labels. In an embodiment, the stamp wheels include an eccentric bearing to rotate of of a normal spinning rotation "off balance," causing a form of oscillation in the stamp wheel that brings the wheel into discontinuous contact with the label media.

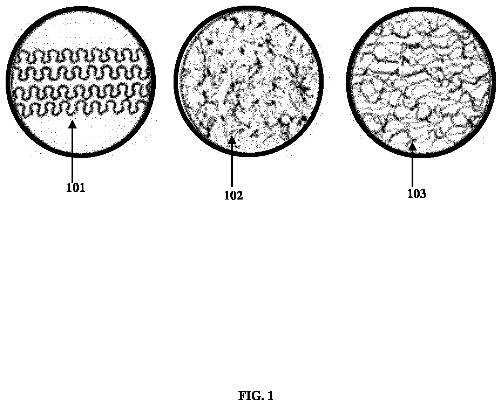

FIG. 1 is a diagram of discontinuous hot melt adhesive patch patterns, according to an example embodiment. Pattern 101 shows 4 separate rows of hot melt adhesive. Pattern 102 shows a random or chaotic application of hot melt adhesive. Pattern 103 is less random or chaotic (i.e., more uniform) from that which is shown in pattern 102. Moreover, pattern 103 shows a more uniform distribution of coat weights for the hot melt adhesive than does pattern 102. In patterns 102 and 103 the density or coat weight of hot melt adhesive is shown as darker shaded lines when compared to the lighter shaded lines present in patterns 102 and 103. In an embodiment, pattern 101 is a repeated patterned hotmelt.

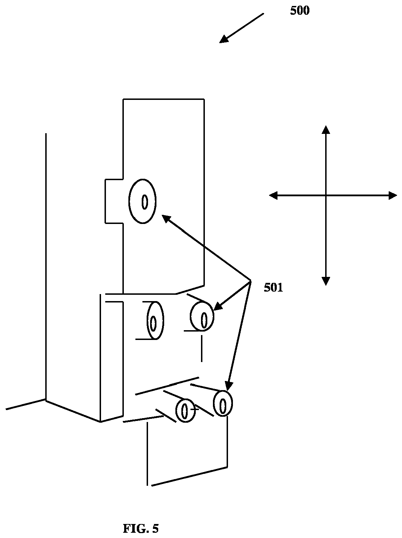

Patterns 101-103 illustrate primary patterns of hot melt adhesive ejected by one or more nozzles/jets of a single hot melt adhesive dispensing module 500, which is shown and discussed below with FIG. 5. Additionally, multiple modules 500 can be arranged in a grid or array during application of hot melt adhesive to the backsides of labels. Each module 500 can oscillate and/or move side to side and up and down to achieve a desired overall hot melt adhesive patch pattern on the labels.

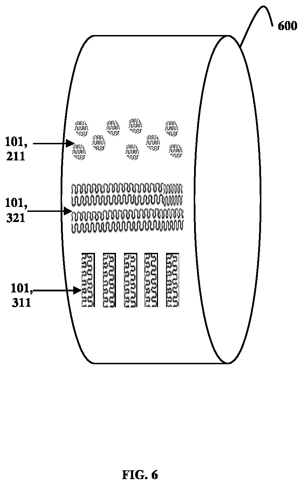

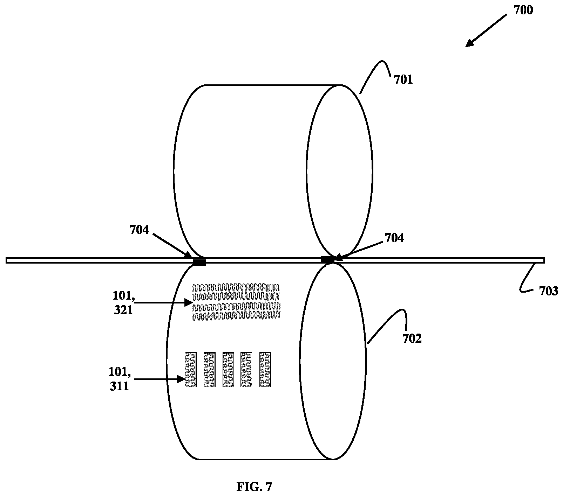

Discontinuous hot melt adhesive patch patterns can be applied to the backsides of the labels via other devices and techniques. Example other techniques are discussed below with FIGS. 6 and 7. The other techniques can use different primary discontinuous patterns from what is illustrated in FIG. 1.

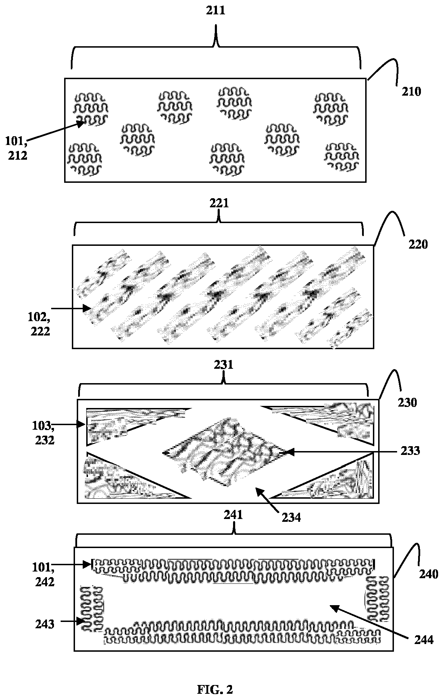

FIG. 2 is a diagram of discontinuous hot melt adhesive patch patterns on backsides of labels, according to an example embodiment. The diagram illustrates 4 labels 210, 220, 230, and 240. Each label includes one of the primary hot melt adhesive patterns 101-103 repeated and arranged in a secondary adhesive patch pattern 211, 221, 231, or 241 and applied as at least one or at least one and additional discontinuous hot melt adhesive patches 212, 222, 232, 233, 242, and/or 243 on a backside of the substrate for the corresponding label. That is, multiple instances of a given discontinuous hot melt adhesive patterns 101, 102, or 103 are arranged and oriented into any of the secondary adhesive patch patterns 211, 221, 231, or 241. A single discontinuous adhesive patch or multiple patches are then disposed or applied on the backside of the labels 210, 220, 230, and/or 240. In an embodiment, a given label 210, 220, 230, or 140 includes a given pattern 211, 221, 231, or 241, the given pattern 211, 221, 231, or 241 includes multiple different patches 212, 222, 232, 233, 242, and/or 243 made of one or at least two different primary patterns 101, 102, and/or 103. Patch or patches 212, 222, 232, 233, 242, and/or 243 are disposed on the backside of label or labels 210, 220, 230, and/or 240 in predefined shapes within the corresponding pattern or patterns 211, 221, 231, and/or 241.

Label 210 includes primary pattern 101 arranged in a secondary pattern 211 on the backside of label 210. The secondary pattern 211 includes a plurality of discontinuous hot melt adhesive patches 212. Each patch 212 is circular in shape, a substantial portion of the backside is devoid of any hot melt adhesive. The patches 212 of the secondary pattern 211 are arranged diagonally across the backside. Each patch 212 is of a same shape

Label 220 includes primary pattern 120 arranged in a secondary pattern 221 on the backside of label 220. The secondary pattern 221 includes a plurality of discontinuous hot melt adhesive patches 222. Each patch 222 is bar shaped and separated from an adjacent patch 22 by void areas where there is no hot melt adhesive. Like pattern 211, the bar-shaped patches 222 are arranged diagonally across the backside. The bar-shaped patches 222 include different sized patches 222 whereas the patches 212 of label 210 where each of a same sized patch 212. Each patch 222 are of same shape within pattern 211 of label 210.

Label 230 includes a primary pattern 103 arranged in a secondary pattern 231 on the backside of label 230. The secondary pattern 231 includes a plurality of discontinuous hot melt adhesive patches 232 and 233. Patches 232 are disposed adjacent to corners of the backside and are in right triangular shapes, each right angle of each triangular shape is adjacent to a unique corner of the backside. Patches 232 are also of a same size. Patch 233 is of a different size from patches 232, further patch 233 is substantially centered on the backside and is of a diamond shape. Void area 234 is devoid of any adhesive and separates patches 233 from patches 232. Void area 234 is also diamond shaped and covers a larger area of the backside than does patch 233. Patches 232 and 233 do not intersect and each patch 232 or 233 is separated from remaining patches by void area 234. Patches 232 are of a different shape than patch 233.

Label 240 includes a primary pattern 101 arranged in a secondary pattern 241 on the backside of the label 240. The second pattern 241 includes a plurality of discontinuous hot melt adhesive patches 242 and 243. Patches 242 are disposed adjacent to a top and a bottom of the backside whereas patches 243 are disposed adjacent to a left side and a right side of the backside. Each patch 242 is of a same size and each patch 243 is of a same size whereas patches 242 and 243 are of different sizes. Patches 242 and 243 outline the sides and are adjacent to the sides (top, bottom, left, and right) along the backside. A substantial center of the backside includes a void area 244 which is devoid of any hot melt adhesive. Patches 242 are of a different shape than patch 243.

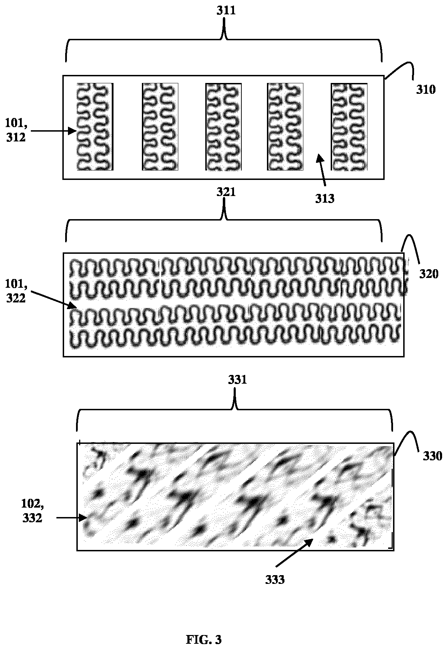

FIG. 3 is a diagram of additional discontinuous hot melt adhesive patch patterns on backsides of labels, according to an example embodiment. The diagram illustrates 3 labels 310, 320, and 330. Each label includes one of the primary hot melt adhesive patterns 101-103 repeated and arranged in a secondary adhesive patch pattern 311, 321, or 331 and applied as at least one or at least one and additional discontinuous hot melt adhesive patches 312, 322, and/or 332 on a backside of the substrate for the corresponding label. That is, multiple instances of a given discontinuous hot melt adhesive patterns 101, 102, or 103 are arranged and oriented into any of the secondary adhesive patch patterns 311, 321, or 331. A single discontinuous adhesive patch or multiple patches 312, 322, or 332 are then disposed or applied on the backside of the labels 310, 320, and/or 330. In an embodiment, a given label 310, 320, or 330 includes a given pattern 311, 321, or 331, the given pattern 311, 321, or 331 includes multiple different patches 312, 323, or 332, each patch 312, 323, or 332 made of one or at least two different primary patterns 101, 102, and/or 103. Patch or patches 312, 322, and/or 332 are disposed on the backside of label or labels 310, 320, and/or 330 in predefined shapes within the corresponding pattern or patterns 311, 321, and/or 331.

Label 310 includes a primary pattern 101 arranged in a secondary pattern 311 on the backside of the label 310. The secondary pattern 311 includes a plurality of discontinuous hot melt adhesive patches 312. Patches 312 are bar-shaped and are of a same size. Patches 312 are arranged in a single row across the backside and separated by void areas 313 that are devoid of any hot melt adhesive. Each bar-shaped patch 312 extends from a top of the backside to a bottom of the backside and separated from at least one adjacent patch 312 by void area 313.

Label 320 includes a primary pattern 101 arranged in a secondary pattern 321 on the backside of the label 320. The secondary pattern 321 includes a plurality of discontinuous hot melt adhesive patches 322. The patches 322 are arranged in rows from right to left along the backside, each patch 322 is separated by a void area that is devoid of any hot melt adhesive. In an embodiment, primary pattern 102 or 103 is applied in pattern 321 as one or more discontinuous adhesive patches 322 on the backside of label 320.

Label 330 includes a primary pattern 102 arranged in a secondary pattern 331 on the backside of the label 330. The secondary pattern 331 includes a plurality of discontinuous hot melt adhesive patches 332. The patches 332 are arranged diagonally across the backside and each patch 332 is separated by at least two void areas 333 that are devoid of any hot melt adhesive. Patches 332 are bar shaped the sizes of the patches 332 varies across the backside.

In an embodiment, labels 210, 220, 230, 240, 310, 320, and 330 are linerless labels. In an embodiment, labels 210, 220, 230, 240, 310, 320, and 330 are liner-based labels.

It is to be noted that any of the above discussed secondary patch patterns 211, 221, 231, 241, 311, 321, and/or 331 can be disposed on the backside of a corresponding label 210, 220, 230, 240, 310, 320, or 330 using any of the above-referenced discontinuous hot melt adhesive primary patterns 101, 102, and/103. Furthermore, the primary patterns can include additional discontinuous hot melt adhesive patterns when a stamp based, screen based, and/or gravure-based manufacturing is used. That is, primary patterns 101, 102, and/or 103 are illustrated for when a hot melt module 500 with nozzles 501 and/or jets 501 are used to apply the hot melt adhesive to the backside.

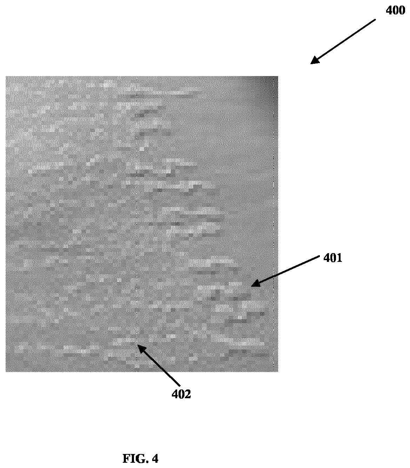

FIG. 4 is an image 400 a discontinuous hot melt adhesive patch pattern applied in layers to backside of a label substrate, according to an example embodiment. Image 400 illustrates the hot melt adhesive is stacked in layers onto the backside of the label substrate. Varying degrees of layers 401 and 402 can be used. The layering of the hot melt adhesive can be achieved in all or a configured portion of the secondary patch patterns 211, 221, 231, 241, 311, 321, and/or 331. Layering can be used when hot melt modules 500 are used to manufacture labels 210, 220, 230, 240, 310, 320, and/or 330.

Counterintuitively, experimentation has discovered that layers 401 and 402 of hot melt adhesive exhibits unusual and counterintuitive capabilities or characteristics. As a result, hot melt adhesive, which is of a high tack and which is not understood to be a repositionable adhesive, exhibits unexpected and novel characteristics associated with repositioning without the layered hot melt adhesive losing its underlying high tack characteristics. Thus, shipping labels and other labels that require a high tack adhesive, such as hot melt adhesive, can be removed from a surface and reapplied to another surface with the discontinuous hot melt adhesive patches 212, 222, 232, 233, 242, 243, 312, 322, and/or 332 and patterns 211, 221, 231, 241, 311, 321, and/or 331 discussed herein. Also, experimentation with layering has revealed that layers 401 and 402 applied in the discontinuous hot melt adhesive patches 212, 222, 232, 233, 242, 243, 312, 322, and/or 332 and patterns 211, 221, 231, 241, 311, 321, and/or 331 exhibit more tack characteristics than does a flood coating of hot melt adhesive. The resulting characteristics of hot melt layering is a super aggressive Sticky Media^{®}.

FIG. 5 is a diagram of a hot melt adhesive module 500 that includes jets 501 and/or nozzles 501 which eject hot melt adhesive onto backsides of labels during label manufacturing, according to an example embodiment. A single module 500 includes 1 to 5 jets 501, each jet 501 is controlled by firmware/software to dispense hot melt adhesive as an independent stream/spray onto a surface of a backside of a roll of labels during manufacture. Each jet 501 can be individually controlled by the firmware/software to activate and relative to another jet 501. All the jets 501 can also be controlled to produce activate and/or deactivate in unison.

In an embodiment, module 500 includes 5 jets 501, each jet 501 covers an area of 1/5 of a square inch on the backside of the roll when activated; combined a single module 500 covers an area of 1 square inch of the roll. In an embodiment, module 500 is attached with other modules 500 in a grid or an array. In an embodiment, the grid/array can be controlled by firmware/software to move each module 500 in the grid/array up and down and/or left to right during label manufacture. In an embodiment, firmware/software oscillates each module 500 of the grid/array; oscillation varies the coat weight or thickness of the hot melt adhesive applied to the roll and permits layering of the hot melt adhesive.

In an embodiment, the backside of the roll substrate includes printed sense marks (shown in FIG. 7 as 704 of substrate or roll 703). During label manufacture, the sense marks 704 are read by an optical sensor causing the firmware/software to activate and deactivate the jets 510 and/or move the modules 500 of the grid/array. The sense marks 704 can be preprinted on the backside of the roll to delineate between each independent label 210, 220, 230, 240, 310, 320, and/or 330. The printed sense marks 704 can also be read by a printer when the roll is loaded into the printer. The printer uses an optical sensor to determine based on the sense marks 704 where to cut an individual label 210, 220, 230, 240, 310, 320, and/or 330 from the roll.

FIG. 6 is a diagram of a stamp wheel 600, transfer roller 600, or cylinder 600 with discontinuous or continuous hot melt adhesive patch patterns that stamp the hot melt adhesive patch patterns onto backsides of labels during manufacturing, according to an example embodiment. The stamp wheel/roller/cylinder 600 rotates to collect hot melt adhesive on raised elements on the surface of the wheel/roller/cylinder 600, which is then pressed onto a web of a substrate associated with labels 210, 220, 230, 240, 310, 320, and/or 330 as the web is moved in a direction past the wheel/roller/cylinder 600. This causes discontinuous hot melt adhesive patterns 211, 221, 231, 241, 311, 321, 331, and/or other discontinuous hot melt adhesive patterns to be pressed on the substrate. Each pattern represents an individual label defined in the web or roll.

In an embodiment, the wheel/roller/cylinder 600 includes a continuous hot melt patch pattern which is rolled or pressed onto the web or roll. The patch areas defined can be of any shape, such as starts, squares, circles, diamonds, birds, trees, shoes, cars, etc.

The wheel/roller/cylinder 600 includes a plurality of different and disparate secondary discontinuous hot melt adhesive patterns as illustrated by patterns 211, 321, and 311 associated with primary discontinuous hot melt adhesive pattern 101. Alternatively, wheel/roller/cylinder 600 includes a plurality of same discontinuous hot melt adhesive patterns, not shown in FIG. 6.

In an embodiment, the secondary discontinuous hot melt patches embossed on wheel/roller/cylinder 600 can include any of secondary patterns 211, 221, 231, 241, 311, 321, 331, and/or other discontinuous hot melt adhesive patterns. In an embodiment, the primary pattern 101 illustrated on wheel/roller/cylinder 600 in the secondary patterns can include any of primary patterns 101-103 or other discontinuous hot melt primary adhesive patterns.

In an embodiment, a plurality of wheels/rollers/cylinders 600 are arranged in one or more lines or sequences. The wheels/rollers/cylinders 600 roll onto the substrate of the web as the substrate is pulled in a web direction past the wheels/rollers/cylinders 600.

In an embodiment, the wheel/roller/cylinder 600 or wheels/rollers/cylinders 600 are oscillated as the substrate is pulled in a web direction past the wheels/rollers/cylinders 600. This causes the discontinuous hot melt adhesive patterns to vary from label to label within the roll on the backside of the substrate.

In an embodiment, a stamp wheel 600 is a cylinder type device (sectioned into lanes) that has raised shapes (e.g., like ink hand stampers). The wheel(s) 600 work like glue wheels on turret core hot melt glues.

FIG. 7 is a diagram of a gravure printing cylinder 700, rotary screen, and/or flatbed screen 700 for applying discontinuous or continuous hot melt adhesive patch patterns onto backsides of labels during manufacturing, according to an example embodiment. The gravure printing cylinder/rotary scree/flatbed screen 700 include a resistance cylinder 701 and a rotary/flatbed screen cylinder 702 or gravure printing cylinder 702. A web (e.g., roll) of a label substrate 703 is urged in a web direction between the cylinders/screens 701 and 702 causing cylinders 701 and 702 to press against one another with the substrate 703 passing therebetween. This causes hot melt glue fed to cylinder 702 to pass through or onto the patterns 321 and/or 311 of cylinder/screens 702 and pressed onto the backside of substrate 703. Each of the secondary patterns 311 and/or 321 include a primary discontinuous adhesive pattern 101 arranged in the corresponding patterns 311 and/or 321. In an embodiment, boundaries between each individual label are delineated by printed sense marks 704 on the substrate 703.

It is to be noted that any of the primary patterns 101-103 can be used in formulating the secondary patterns. Additionally, it is to be noted that different discontinuous adhesive primary patterns other than primary patterns 101-103 can be used in formulating the secondary patterns. Furthermore, although FIG. 7 illustrates secondary patterns 311, 321, and/or 321, any of the secondary patterns 211, 221, 231, 241, 311, 321, and 331, can include other secondary patterns that include a primary discontinuous adhesive patch pattern.

In an embodiment, the cylinder/screen 600 includes a continuous hot melt patch pattern which is layered onto the web or roll. The patch areas defined can be of any shape, such as starts, squares, circles, diamonds, birds, trees, shoes, cars, etc.

Although cylinder 702 includes different secondary patch patterns, it is noted that cylinder 702 can include multiple instances of a single same secondary patch pattern on cylinder 702. Multiple instances of a same secondary patch pattern on cylinder 702 can include a same primary discontinuous patch pattern arranged in the secondary patch pattern or include multiple instances of a same secondary patch pattern with each instance of the secondary patch pattern associated with a different primary patch pattern.

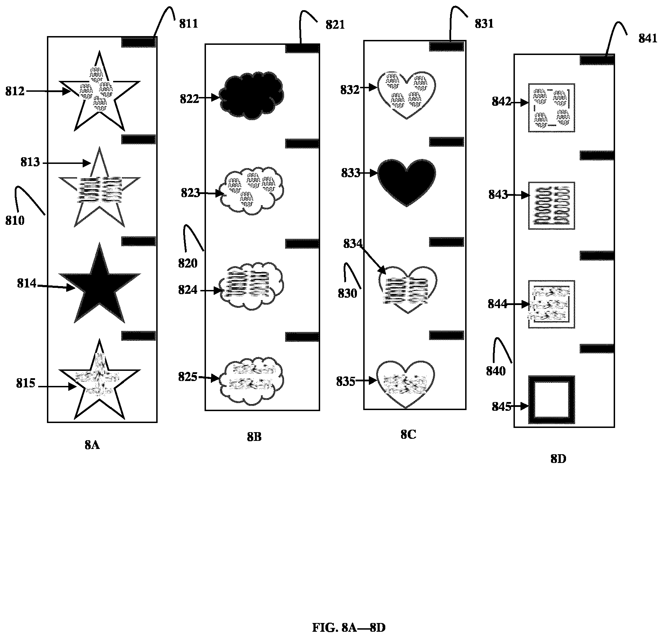

FIGS 8A-8D are diagrams of rolls 810, 820, 830, and 840 of adhesive patch patterns on backsides of label substrates with the labels 810, 820, 830, and 840 defined by sense marks 811, 821, 831, and 841 printed on the rolls, according to an example embodiment. In FIG. 8A, roll 810 illustrates a plurality of labels, each corresponding label separated by a sense mark or a pair of sense marks 811. The shape of each adhesive patch 812, 813, 814, and 815 is a star shape in roll 810. In an embodiment, the discontinuous adhesive patch primary pattern varies from label to label within roll 810. In an embodiment, at least one adhesive patch pattern is continuous as shown in patch 814 of roll 820.

In FIG. 8B, roll 820 illustrates a plurality of labels, each corresponding label separated by a sense mark or a pair of sense marks 821. The shape of each adhesive patch 822, 823, 824, and 825 is a cloud shape. In an embodiment, the discontinuous adhesive patch primary pattern varies from label to label. In an embodiment, at least one adhesive patch pattern is continuous as shown in patch 822 of roll 820.

In FIG. 8C, roll 830 illustrates a plurality of labels, each corresponding label separated by a sense mark or a pair of sense marks 831. The shape of each adhesive patch 832, 833, 834, and 835 is a heart shape. In an embodiment, the discontinuous adhesive patch primary pattern varies from label to label. In an embodiment, at least one adhesive patch pattern is continuous as shown in patch 833 of roll 830.

In FIG. 8D, roll 840 illustrates a plurality of labels, each corresponding label separated by a sense mark or a pair of sense marks 841. The shape of each adhesive patch 842, 843, 844, and 845 is an outlines square shape. In an embodiment, the discontinuous adhesive patch primary pattern varies from label to label. In an embodiment, at least one adhesive patch pattern is continuous as shown in patch 842 of roll 840.

In an embodiment, the discontinuous patch patterns are all the same primary shape and primary discontinuous primary pattern within a given roll (not shown in FIGS. 8A-8D. In an embodiment, the shapes of the adhesive patches within a single roll vary from label to label between the corresponding sense marks. In an embodiment, both the shapes of the adhesive patches and the primary discontinuous patch patterns vary within a given roll.

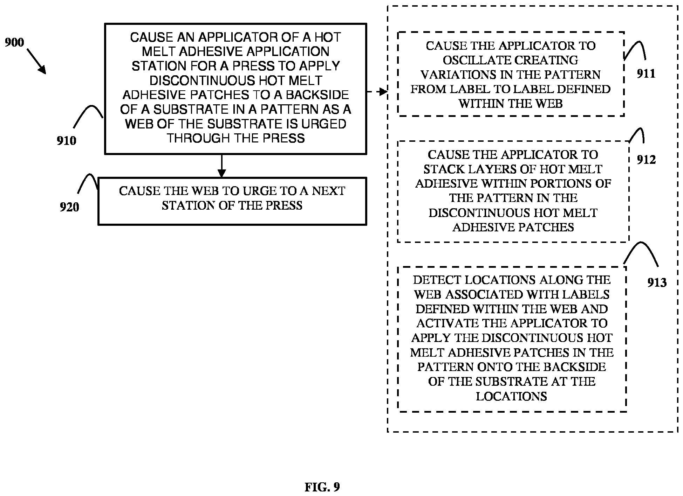

FIG. 9 is a diagram of a method 900 for manufacturing a roll of linerless labels 210, 220, 230, 240, 310, 320, and/or 330 with discontinuous hot melt adhesive patch patterns 211, 221, 231, 241, 311, 321, and/or 331 on the backside of the linerless labels 210, 220, 230, 240, 310, 320, and/or 330, according to an example embodiment. The method is implemented on a press through firmware that controls electromechanical components of the press to manufacture a the linerless labels 210, 220, 230, 240, 310, 320, and/or 330 with discontinuous hot melt adhesive patch patterns 211, 221, 231, 241, 311, 321, and/or 331 as described herein and above. A processor associated with the firmware/software executes instructions to perform the method and to control the electromechanical components of the press.

The press includes a variety of stations. Each station associated with manufacturing a specific component of the linerless labels. The roll includes a web of a label substrate that passes through the stations and is wound into a roll of the labels. Each role includes a plurality of instances of linerless labels defined within the corresponding roll. The processor executes the instructions of the firmware/software to cause the corresponding electromechanical components of a given station to add the corresponding specific component to the labels of the roll. The specific components added to the labels at the stations include, by way of example only, applying hot melt adhesive in discontinuous hot melt patch patterns to a backside of the substrate, applying a release coating to a front side of the substrate, applying a thermally activated print coating to the backside and/or frontside of the substrate when the thermally activated print coating was not already present on the substrate, drying one or any of the coatings applied to the backside and/or front side of the substrate, cooling or curing one or any of the coatings applied to the backside and/or front side of the substrate, printing sense marks 704 when the sense marks 704 were not already pre-printed on the labels substrate, a cutting station that cuts the web into sheets, a rolling stations that rolls each sheet into a roll, etc.

A hot melt adhesive application station includes a variety of electromechanical components controlled by the processor via the corresponding instructions of the firmware/software. The electromechanical components include an applicator controlled by the processor to apply the hot melt adhesive. In an embodiment, the electromechanical components of the applicator include a single hot melt module 500 or a plurality of hot melt modules 500 arranged in an array or a grid. In an embodiment, the electromechanical components of the applicator include a stamp wheel 600 or a plurality of stamp wheels 600 arranged in a single line or a plurality of lines. In an embodiment, the electromechanical components of the applicator include a single gravure printing cylinder 700 and/or a single rotary flatbed screen 700. In an embodiment, the electromechanical components of the applicator include a plurality of gravure printing cylinders 700 and/or plurality of rotary flatbed screens 700 arranged in a plurality of rows.

In an embodiment, the primary discontinuous hot melt adhesive patterns, which are arranged in the secondary discontinuous hot melt adhesive patterns, include primary discontinuous hot melt adhesive patterns 101, 102, 103, and any other primary discontinuous hot melt adhesive patterns. In an embodiment, the secondary discontinuous hot melt adhesive patterns include 211, 221, 231, 241, 311, 321, 331, and any other secondary discontinuous hot melt adhesive patterns.

At 910, the processor of the press causes the applicator to apply discontinuous hot melt adhesive patches to a backside of a substrate in a pattern as a web of the substrate is urged through the station. Each patch includes a primary discontinuous hot melt pattern arranged in a secondary discontinuous hot melt pattern. Furthermore, each secondary discontinuous hot melt pattern defines a given label on the web of the label substrate.

In an embodiment, at 911, the processor of the press causes the applicator to oscillate creating variations in the pattern from label to label within the web. In an embodiment, at 912, the processor of the press causes the applicator to stack layers of hot melt adhesive within portions of the pattern.

In an embodiment, at 913, the processor detects locations along the web associated with labels defined within the web and activates the applicator to dispose the discontinuous hot melt adhesive patches in the pattern for the labels at the locations. In an embodiment the locations are detected by sensor data provided by an optical sensor associated with the applicator. In an embodiment, the sensor data indicates the presence of sensor marks printed along the backside of the web. In response to the detection of a given sense mark 704 or pair of sense marks 704 for a given label, the processor causes the applicator to eject, spray, or press hot melt adhesive in a discontinuous hot melt adhesive patch in the pattern onto the backside of the substrate at the given location, which is delineated by the sense mark 704 or pair of sense marks 704.

At 920, the processor causes the web to be urged to a next station associated with the press. In an embodiment, the next station is a drying station, a cooling station, and/or curing station that cures the discontinuous hot adhesives patches on the backside of the roll.

Although the present invention is described with reference to certain preferred embodiments thereof, variations and modifications of the present invention can be affected within the scope of the following claims.

### CLAUSES:

It should also be noted that the present disclosure can also take configurations in accordance with the following numbered clauses:
Clause 1. A label, comprising:
   a substrate; and
   a discontinuous hot melt adhesive patch disposed in a pattern on a backside of the substrate.
Clause 2. The label of Clause 1, wherein the label is a linerless label.
Clause 3. The label of Clause 1 or Clause 2, wherein hot melt adhesive of the discontinuous hot melt adhesive patch is layered or stacked onto the backside of the substrate within at least a portion of the pattern.
Clause 4. The label of any one of Clauses 1 to 3, wherein the pattern comprises a primary discontinuous pattern repeated and arranged in a secondary pattern on the backside of the substrate, wherein the secondary pattern is the pattern.
Clause 5. The label of Clause 4, wherein the primary pattern is repeated and disposed on the backside of the substrate in the secondary pattern with one or more layers of hot melt adhesive stacked in portions of the secondary pattern.
Clause 6. The label of any one of Clauses 1 to 5, wherein the pattern comprises at least two different primary discontinuous patterns repeated and arranged in a secondary pattern on the backside of the substrate, wherein the secondary pattern is the pattern.
Clause 7. The label of any one of Clauses 1 to 6 further comprising, additional discontinuous hot melt adhesive patches disposed in the pattern on the backside of the substrate.
Clause 8. The label of Clause 7, wherein the discontinuous hot melt adhesive patch and the discontinuous hot melt adhesive patches are of a same shape.
Clause 9. The label of Clause 7, wherein the discontinuous hot melt adhesive patch and the discontinuous hot melt adhesive patches are of different shapes.
Clause 10. The label of any one of Clauses 7 to 9, wherein the pattern includes the discontinuous hot melt adhesive patch and the additional discontinuous hot melt adhesive patches that are bar shaped and separated by void areas that are devoid of any hot melt adhesive.
Clause 11. The label of any one of Clauses 7 to 9, wherein the pattern includes the discontinuous hot melt adhesive patch and the additional discontinuous hot melt adhesive patches that are circular shaped and separated by void areas that are devoid of any hot melt adhesive.
Clause 12. The label of any one of Clauses 7 to 9, wherein the pattern includes the discontinuous hot melt adhesive patch in a diamond shape and the additional discontinuous hot melt adhesive patches in triangular shapes and separated by void areas that are devoid of any hot melt adhesive.
Clause 13. A roll of labels, comprising:
   a substrate; and
   at least one discontinuous hot melt adhesive patch disposed on a backside of at least one label of the substrate in a pattern, wherein the labels are defined and separated by sense marks disposed on the backside of the substrate.
Clause 14. The roll of Clause 13, wherein each of the discontinuous hot melt adhesive patches include a repeated primary discontinuous hot melt adhesive pattern.
Clause 15. The roll of Clause 14, wherein each of the discontinuous hot melt adhesive patches are disposed on the backside in predefined shapes within the pattern.
Clause 16. The roll of any one of Clauses 13 to 15 further comprising a continuous adhesive patch disposed on the backside of at least one additional label of the roll in a predefined shape.
Clause 17. A method, comprising:
   causing an applicator of a hot melt adhesive application station for a press to apply discontinuous hot melt adhesive patches to a backside of a substrate in a pattern as a web of the substrate is urged through the applicator; and
   causing the web to urge to a next station of the press.
Clause 18. The method of Clause 17, wherein causing the applicator further includes causing the applicator to oscillate creating variations in the pattern from label to label defined within the web.
Clause 19. The method of Clause 17 or Clause 18, wherein causing the applicator further includes causing the applicator to stack layers of hot melt adhesive within portions of the pattern within the discontinuous hot melt adhesive patches.
Clause 20. The method of any one of Clauses 17 to 19, wherein causing the applicator further includes detecting locations along the web associated with labels defined within the web and activating the applicator to apply the discontinuous hot melt adhesive patches in the pattern onto the backside of the substrate at the locations.

## Claims

1. A label, comprising:
a substrate; and
a discontinuous hot melt adhesive patch disposed in a pattern on a backside of the substrate.

2. The label of claim 1, wherein the label is a linerless label.

3. The label of claim 1 or claim 2, wherein hot melt adhesive of the discontinuous hot melt adhesive patch is layered or stacked onto the backside of the substrate within at least a portion of the pattern.

4. The label of any one of claims 1 to 3, wherein the pattern comprises a primary discontinuous pattern repeated and arranged in a secondary pattern on the backside of the substrate, wherein the secondary pattern is the pattern, wherein, optionally, the primary pattern is repeated and disposed on the backside of the substrate in the secondary pattern with one or more layers of hot melt adhesive stacked in portions of the secondary pattern.

5. The label of any one of claims 1 to 3, wherein the pattern comprises at least two different primary discontinuous patterns repeated and arranged in a secondary pattern on the backside of the substrate, wherein the secondary pattern is the pattern.

6. The label of any one of claims 1 to 5, further comprising additional discontinuous hot melt adhesive patches disposed in the pattern on the backside of the substrate.

7. The label of claim 6, wherein the discontinuous hot melt adhesive patch and the discontinuous hot melt adhesive patches are of a same shape or of different shapes.

8. The label of claim 6, wherein the pattern includes the discontinuous hot melt adhesive patch and the additional discontinuous hot melt adhesive patches that are bar shaped or circular shaped and separated by void areas that are devoid of any hot melt adhesive.

9. The label of claim 6, wherein pattern includes the discontinuous hot melt adhesive patch in a diamond shape and the additional discontinuous hot melt adhesive patches in triangular shapes and separated by void areas that are devoid of any hot melt adhesive.

10. A roll of labels, comprising:
a substrate; and
at least one discontinuous hot melt adhesive patch disposed on a backside of at least one label of the substrate in a pattern, wherein the labels are defined and separated by sense marks disposed on the backside of the substrate.

11. The roll of claim 10, wherein each of the discontinuous hot melt adhesive patches include a repeated primary discontinuous hot melt adhesive pattern, and wherein each of the discontinuous hot melt adhesive patches are optionally disposed on the backside in predefined shapes within the pattern.

12. The roll of claim 10 further comprising a continuous adhesive patch disposed on the backside of at least one additional label of the roll in a predefined shape.

13. A method, comprising:
causing an applicator of a hot melt adhesive application station for a press to apply discontinuous hot melt adhesive patches to a backside of a substrate in a pattern as a web of the substrate is urged through the applicator; and
causing the web to urge to a next station of the press.

14. The method of claim 13, wherein causing the applicator further includes:
causing the applicator to oscillate creating variations in the pattern from label to label defined within the web, and/or causing the applicator to stack layers of hot melt adhesive within portions of the pattern within the discontinuous hot melt adhesive patches.

15. The method of claim 13 or claim 14, wherein causing the applicator further includes detecting locations along the web associated with labels defined within the web and activating the applicator to apply the discontinuous hot melt adhesive patches in the pattern onto the backside of the substrate at the locations.
